# EUROPEAN PATENT SPECIFICATION

(11) **EP 3 951 029 B1**
(45) Date of publication and mention of the grant of the patent: **22.02.2023**
(21) Application number: 21189834.1
(22) Date of filing: 05.08.2021
(51) Int. Cl.: D01D 1/02, D01F 6/18, D01F 6/38

(54) **PROCESS FOR THE PRODUCTION OF ACRYLIC FIBERS**
VERFAHREN ZUR HERSTELLUNG VON ACRYLFASERN
PROCÉDÉ POUR LA PRODUCTION DE FIBRES ACRYLIQUES

(30) Priority: 07.08.2020 IT 202000019582
(43) Date of publication of application: 09.02.2022
(73) Proprietor: Montefibre Mae Technologies S.R.L., 20145 Milano (IT)
(72) Inventor: MARINETTI, Massimo, I-30172 Mestre (VE) (IT); BELLARDI, Luca, I-26100 CREMONA (IT); Vittoria, BROGNI, I-29122 PIACENZA (IT); JINJUN, Wang, Jilin City (CN)
(74) Representative: De Gregori, Antonella

(56) References cited:
- EP-A1- 2 894 243
- EP-A1- 3 375 915
- JP-A- S5 218 923

## Description

The present invention relates to a simplified and improved process for the production of acrylic fibers, in particular a process for preparing a spinning solution for the production of acrylic fibers.

More specifically, the present invention falls within the sector relating to the production of acrylic fibers which provides for the preparation of polymers starting from acrylonitrile or copolymers mainly composed of acrylonitrile (90-99% by weight with respect to the total weight of the polymer) and by one or more other comonomers in a quantity generally ranging from 1 to 10% by weight with respect to the total weight of the polymer.

The preferred co-monomers are both neutral vinyl molecules such as methyl acrylate, methyl methacrylate, vinyl acetate, acrylamide and analogues, and also molecules bearing one or more acid groups such as acrylic acid, itaconic acid, styrenes sulfonates and analogues, or other comonomers capable of imparting different physico-chemical characteristics to the material.

The polymers and copolymers thus prepared are then subjected to spinning to produce fibers that are collected in tows, suitable for being subsequently transformed into manufactured articles with different processing techniques, for both textile and technical use.

Particular types of acrylic fiber are fiber "precursors" for carbon fibers: these are high-molecular-weight copolymers of acrylonitrile and one or more co-monomers, selected from those described above, in a quantity generally ranging from 1 to 5% by weight with respect to the total weight of the polymer. The carbon fibers are then obtained by means of a suitable thermal treatment of these fiber "precursors" based on polyacrylonitrile.

There are various industrial processes for the preparation of acrylic fibers, which use different polymerization and spinning methods.

The state of the art can be divided and schematized as follows:

### A. Discontinuous Processes (two-step).

In two-step batch processes, the polymer is generally produced in an aqueous suspension, isolated and subsequently dissolved in a suitable solvent to be spun and transformed into fiber or fiber precursor in the case of carbon fiber. The solvents most commonly used for the preparation of the spinning solution are: dimethylacetamide (DMAc), dimethylformamide (DMF), an aqueous solution of sodium thiocyanate (NaSCN) and, finally, mixtures of dimethylsulfoxide (DMSO) with varying amounts of water, as recently described in patent US 9,296,889 B2

### B. Continuous Processes (one-step).

In continuous processes, on the other hand, the polymerization takes place in a solvent and the solution thus obtained is directly used in spinning without the intermediate isolation of the polymer. The solvents most commonly used in these processes are: dimethylformamide (DMF), dimethyl sulfoxide (DMSO), aqueous solution of zinc chloride (ZnCl₂) and aqueous solution of sodium thiocyanate (NaSCN).

Discontinuous processes have significant advantages from the management point of view: the two polymerization and spinning steps are in fact independent and the traces of impurities and unreacted monomers can be easily separated from the polymer by washing and filtration, before the spinning step.

Processes of this type are consequently much more widely-used in industrial practice for the production of acrylic fibers and represent a substantial share of the production processes of precursor for carbon fiber.

Industrially, discontinuous processes provide for a drying step of the polymer obtained from polymerization in aqueous suspension, carried out by means of belt or fluidized bed dryers. The polymer in powder form is then transported to silos where it remains stored until the moment of use. In order to prepare the spinning solution (the dope), the powdered polymer is then closely mixed with the solvent with procedures suitable for obtaining solutions free from lumps and gels. After filtration, the dope is finally sent to the spinning machines.

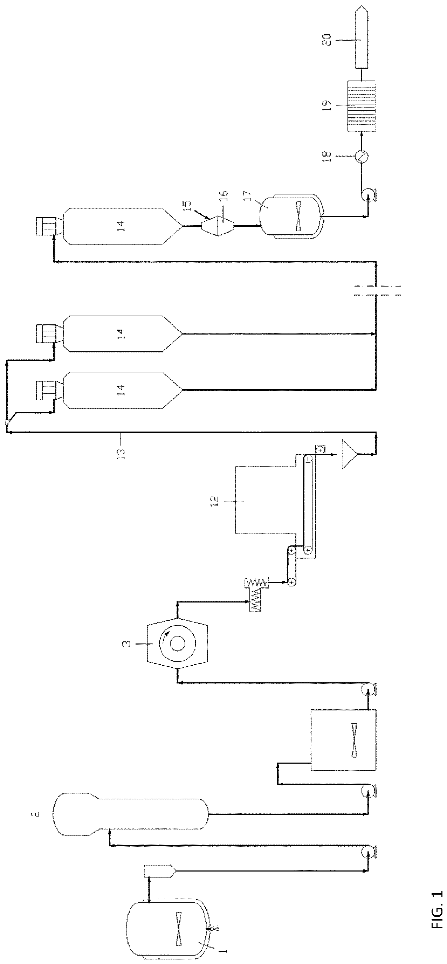

The above process according to the state of the art is schematically described in figure 1.

Furthermore, the isolation, drying and conveying steps of the polymer in powder form, as also the preparation step of the spinning solution, involve complex and expensive equipment that requires particular attention in terms of safety, as fine, potentially explosive powders, are present in the process. These process steps, moreover, are also severely penalizing from an energy point of view due to the presence of drying units, generally operating with hot air or nitrogen, and units for transporting the polymer in powder form.

US patent 10,619,012 B2, on the other hand, claims and describes a production process which provides for overcoming the drying step of the polymer, said process being aimed at obtaining polymeric solutions of polyacrylonitrile-based polymers mainly destined for spinning. In this case, it is claimed that slurries of wet polymer in dimethyl sulfoxide (DMSO), obtained by dispersing a filtration cake in more or less diluted solvent, can give excellent polymer solutions (dopes) through the removal of water from the polymer suspensions.

The removal of water and the formation of the polymer solution destined for spinning takes place through evaporation systems at reduced pressure which, also thanks to the increase in temperature, lead to the formation of a polymer solution free of gels and correctly formed.

The objective of the present invention is to avoid processes for the removal of water or concentration of polymeric solutions by means of complex equipment such as vacuum equipment, thin-film evaporators or other devices, thus optimizing the production process of the polymeric solution and therefore the entire fiber production process.

### Detailed description of the invention

The present invention therefore relates to a process for preparing a homogeneous dispersion or slurry to be transformed into a homogeneous spinning solution for the production of acrylic fibers which comprises the following steps:
i) preparation of an aqueous suspension of acrylonitrile homopolymer or copolymer by the polymerization of monomers in aqueous suspension, removal of the unreacted monomers, filtration and washing of the aqueous suspension, obtaining a first filter cake comprising polymer and water in a ratio ranging from 40/60 to 60/40 by weight, preferably in a weight ratio equal to or greater than 1:1,
ii) dispersion of said first filter cake in a solvent/water mixture or in pure solvent in a weight ratio ranging from 2 to 10 times the weight of the cake, preferably at a temperature lower than or equal to 5°C and for a time ranging from 5 to 15 minutes, under stirring;
iii) separation of the solid/liquid phases of said polymer dispersion by filtration or centrifugation, obtaining a second cake comprising polymer and a solvent/water mixture, in a ratio ranging from 40/60 to 70/30 by weight;
iv) re-dispersion of the second cake obtained in step iii) in the same solvent or water/solvent mixture as step ii) in a weight ratio ranging from 2 to 10 times the weight of the polymer in the cake, at room temperature or at a temperature lower than room temperature for a time ranging from 5 to 20 minutes, obtaining a homogeneous dispersion or "slurry" wherein the solvent/polymer weight ratio ranges from 90/10 to 70/30.

This homogeneous dispersion or slurry of step iv) is suitable for the subsequent transformation into a homogeneous polymeric solution (dope). The transformation into dope is carried out by heating the suspension until complete dissolution of the polymer and preferably by passing the slurry into heat exchangers downstream.

The homogeneous spinning solution obtained at the end of the process according to the present invention is free from gel and undissolved residues and can be fed directly to the spinning line or to a storage tank.

The present invention thus makes it possible to obtain a gel-free solution and without the formation of insoluble agglomerates, of homopolymers or copolymers of acrylonitrile, while maintaining the advantages associated with polymerization in aqueous suspension, but eliminating the dangerous and expensive steps of polymer drying, transporting the polymer powder to storage silos and the subsequent redissolution in the solvent for spinning.

The process according to the present invention therefore allows the two polymerization and spinning steps to be integrated in a simplified and economical way.

Furthermore, step iv), carried out by mixing pure solvent and polymer, is particularly simple, especially when the solvent is DMSO, as the powder already soaked in solvent with traces of water does not have the dispersion difficulties indicated in US patent 4,403,055.

The close imbibition of the wet powder with the solvent, preventing the formation of coacerves which are difficult to disperse and dissolve, at the same time optimizes the formation of a fine and homogeneous suspension, as disclosed by US 9,296,889 B2.

In the present description, the term polymer generally refers to both homopolymers obtained starting from acrylonitrile and copolymers obtained starting from acrylonitrile and one or more other comonomers.

In particular, the polymers are high-molecular-weight polymers, ranging from 80,000 to 200,000 Da, or medium-molecular-weight polymers, ranging from 40,000 to 55,000 Da.

In step ii) of the process according to the present invention, pure solvent or a water/solvent mixture is used, cold, i.e. at a temperature generally lower than or equal to 5°C. This temperature can also be below 0°C, if the freezing point of the solvent allows it.

The quantity of water in the solvent/water mixture of step ii) can vary from 0 to 20% by weight with respect to the total weight of the mixture.

Solvents suitable for being used in the various steps of the process according to the present invention, i.e. in step ii) and step iv) are solvents commonly used for the formation of polymeric solutions for spinning acrylic fibers such as, for example, dimethylacetamide (DMAc), dimethylformamide (DMF) or dimethyl sulfoxide (DMSO).

The conditions for obtaining the dispersion in step ii) must be such as not to allow the dissolution or swelling of the polymer granules, therefore the concentration of water in the solvent/water mixture, the operating temperature for obtaining said dispersion and the residence time in the stirred tank in which the dispersion is carried out, must be suitably defined.

In the dispersion of step ii), the filter cake is dispersed in a quantity by weight of solvent/water or pure solvent mixture which ranges from 2 to 10 times the weight of the cake.

Under these conditions, i.e. at low temperature, with a specific solvent that, in the case of a solvent/water mixture, provides for a precise quantity of water, the dispersion medium of step ii) does not have a solvent capacity for the polymer: more specifically, in step ii), the solid particles of the cake, also inside the granules of polymer itself, come into contact with the dispersion medium which soaks them with solvent or a solvent/water mixture, effecting an exchange with the water present in the cake fed to step ii) and replacing this water with pure solvent or with the solvent/water mixture, comprising, as already indicated, a small percentage of water.

The residence time is therefore a time sufficient for the water/solvent concentration in the dispersion medium to reach equilibrium, i.e. a time which is such that the dispersion medium of step ii) replaces the water soaked in the polymeric mass coming from step i) with pure solvent or with the water/solvent mixture. This condition is generally reached by keeping the dispersion under stirring for a time ranging from 5 to 15 minutes, thus obtaining a suitable polymeric dispersion.

In the subsequent step iii) the separation of the two solid/liquid phases, by filtration or centrifugation, leads to the formation of a second polymer cake soaked in an aqueous solution very rich in solvent which, however, does not have the capacity of dissolving the polymer.

The water content that remains in the second cake at the end of the filtration/centrifugation of step iii) will be in relation to: the water/solvent ratio used for redispersing the polymer of step ii), the quantity of water/solvent in which the first panel has been redispersed, and the final liquid/solid ratio of the second cake obtained by filtration or centrifugation in step iii).

The liquid phase resulting from the filtration or centrifugation of step iii) is generally sent to a solvent recovery system by distillation or can be recycled to the dispersion step iii), after a possible correction of the titer with pure solvent.

The second cake deriving from step iii), of which the polymer/solvent/water ratio is now known, is transferred by means of a cochlea or belt conveyor system, to step iv) where in a stirred tank, added to the solvent, it will form a slurry, subsequently transformed into dope by means of heat exchangers downstream.

In step iv), in fact, the second cake obtained in step iii) is redispersed in the same solvent or water/solvent mixture of step ii) in a weight ratio ranging from 2 to 10 times the weight of the polymer in the cake at room temperature or at a temperature below room temperature for a time ranging from 5 to 20 minutes, obtaining a homogeneous dispersion or "slurry". Temperature below room temperature also refers to a temperature of about 5°C in the case of using solvents such as DMAc and DMF.

These spinnable polymeric solutions must generally have a polymer content ranging from 10 to 26 % by weight with respect to the total weight of the spinning solution.

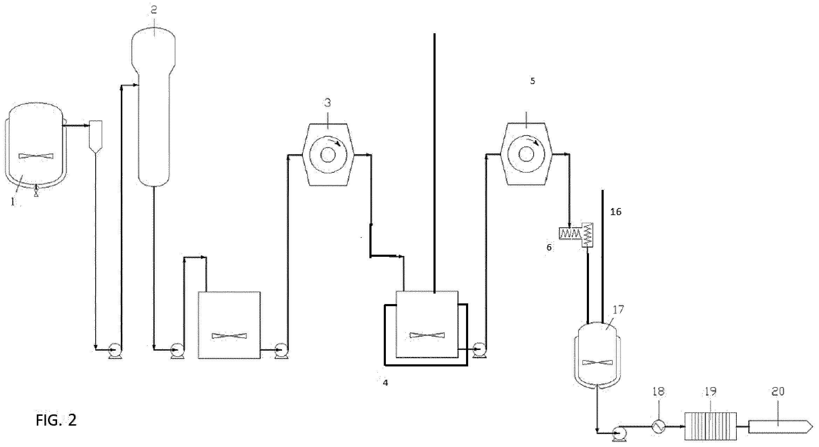

The process according to the present invention is schematically described in figure 2.

A further advantage of the process according to the present invention is determined by the specific quantity of water contained in the spinning or dope solution which is then fed to the spinning step: in fact the percentage of water that remains in the homogeneous solution for the production of acrylic fibers obtained with the process according to the present invention, is in fact absolutely compatible with the acrylic fiber spinning technologies both according to the dry or wet spinning technology and according to the DJWS technology (dry jet wet spinning or air gap): it is therefore not necessary to completely remove the water from the solution intended for spinning.

Furthermore, the presence of small percentages of water in the acrylic fiber spinning solutions as claimed in US 3,932,577, facilitates the compatibilization of the solution itself with the coagulation bath, leading to a fiber free from vacuoles and cracks; these characteristics are particularly advantageous in the production of precursors for carbon fibers or textile fibers having a good gloss and compact structure.

A further advantage linked to the presence of such small quantities of water in the dope is the possibility of conveying, both in the redispersion step iii) and in the preparation step of the slurry iv), water-soluble additives capable of providing the polymer, and therefore the final fiber, with particular performances.

Non-limiting examples of additives capable of providing the polymer and therefore the final fiber with particular performances, are ammonia, primary amines, secondary amines, quaternary ammonium salts, salts of metal ions capable of salifying the ionic end groups of the polymer such as copper or silver, water-soluble polymers for modifying the rheology of the polymer solution, etc.

In particular, for carbon fiber precursors, it should be remembered that the addition to the polymeric solution of suitable quantities of ammonia or amines, as described in Italian patent application 102019000014880, further improves the extrusion of the fiber in the coagulation bath, providing even more compact and vacuole-free fibers, and can increase the reaction kinetics in the oxidation/carbonization phase.

In textile fibers, on the other hand, the addition of antibacterials, fire-retardants or other substances capable of giving particular features to the fibers, can be useful.

The process for the preparation of the homogeneous spinning solution for the production of acrylic fibers according to the present invention provides for the preparation of polymers, such as homopolymers starting from acrylonitrile or copolymers mainly composed of acrylonitrile (90-99% by weight with respect to the total weight of the polymer) and one or more other co-monomers in a quantity generally ranging from 1 to 10% by weight with respect to the total weight of the polymer.

Preferred co-monomers are both neutral vinyl molecules such as methyl acrylate, methyl methacrylate, vinyl acetate, acrylamide and the like, and molecules bearing one or more acid groups such as acrylic acid, itaconic acid, sulfonated styrenes and the like, or other comonomers capable of imparting different physico-chemical characteristics to the material.

Particular types of acrylic fiber are fiber "precursors" for carbon fiber: these are high-molecular-weight copolymers (80,000-200,000 Da) of acrylonitrile (90-99% by weight with respect to the total weight of the copolymer) and one or more comonomers, selected from those described above, in a quantity generally ranging from 1 to 5% by weight with respect to the total weight of the copolymer.

The spinning or dope solution thus obtained can be used immediately for feeding a suitable spinning line or it can be stored in heated tanks.

As previously indicated, in order to illustrate the process according to the state of the art, reference is made to the plant scheme described in figure 1 wherein the polymer coming from the polymerization reactor 1 in the form of slurry in water, after treatment in the stripping column 2 for the removal of the unreacted monomers, is washed and filtered on a rotary filter 3 under vacuum. The powdered polymer is conveyed to the storage sites 14 through a drying unit 12, generally operating with hot air or nitrogen, and subsequently through the line 13. The polymer is fed by means of a cochlea or other conveyor means to a mixing element 15, where the fresh solvent also arrives through line 16 coming from the storage tanks.

In the mixer 15, the powder polymer is dispersed in the solvent and the polymer slurry thus obtained is fed to a storage tank 17 and transformed into a spinning solution by means of the exchanger 18. The solution is then sent to a battery of filter presses 19, with selectivity cloths of 40 µm to 5 µm for the removal of any particles and, through line 20, to the spinning line or to a storage tank (not shown in figure 1).

In order to illustrate an embodiment of the process according to the present invention, reference is made hereunder to the plant diagram shown in figure 2, wherein the process can be carried out both in continuous and batchwise, preferably in continuous.

The polymer coming from the polymerization reactor 1 in the form of slurry in water, after treatment in the stripping column 2 for the removal of unreacted monomers, is washed and filtered on a rotary filter 3 under vacuum, resulting in a cake consisting of polymer and water which passes from step i) to step ii) of the process according to the present invention. The cake coming from the rotary filter 3 is then redispersed in a stirred tank 4 where a low temperature solvent/water or pure solvent mixture is fed through the line 5. In the stirred tank 4, the suspension is kept at a temperature equal to or lower than 5°C. The resulting suspension is kept under stirring for a few minutes and is then fed to a second rotary filter or to a centrifugal separator 5, where step iii) of the process according to the present invention is effected. The mass soaked in water/solvent is fed by means of a cochlea or another conveyor instrument 6 to a stirred tank 17, where the fresh solvent coming from the storage tanks also arrives through line 16 and the whole mixture is transformed into a spinning solution by means of the exchanger 18.

The solution is then sent to a battery of filter presses 19, with selectivity cloths of 40 µm to 5 µm for the removal of any particles and through line 20, to the spinning line or to a dope storage tank (not shown in figure 2).

### Examples.

By way of non-limiting example of the present invention, some embodiment examples of the process according to the present invention are provided hereunder.

### Example 1

Dissolution of a high-molecular-weight acrylic copolymer (PMn = 75,000-100,000) consisting of acrylonitrile (96% by weight with respect to the total weight of the polymer) and the pair methyl acrylate - itaconic acid (4% by weight with respect to the total weight of the polymer).

The polymer coming from the polymerization reactor in the form of slurry in water, after treatment in a stripping column for the removal of unreacted monomers, was washed and filtered on a rotary filter under vacuum, resulting in a cake consisting of polymer (57% in weight) and water (43% by weight).

70 kg of this cake were transferred to a stirred tank and 400 kg of a mixture consisting of DMSO (80%) and water (20%), kept at a temperature of 4°C, were added. The resulting suspension was stirred at 5°C for 5 minutes and then fed to a rotary filter. The filtrate proves to consist of a polymer cake soaked in a water/solvent mixture, in the following proportions by weight: 52% polymer, 39% DMSO and 9% water.

The mass thus obtained was fed in turn through a cochlea to a stirred tank where 115 kg of DMSO were fed to obtain a slurry comprising 20% by weight of polymer, 75% by weight of DMSO and 5% by weight of water. The slurry was fed, by means of a volumetric pump, to the solubilization and transformation system into dope, consisting of:
- a tube-bundle exchanger;
- a static mixer for homogenization;
- a battery of filter presses with selectivity cloths progressively varying from 40 µm to 5 µm for the removal of any possible undissolved particles.

The dope thus produced is characterized by a viscosity of about 320 poises at 70°C.

The viscosity was measured using a Haake "Viscotester IQ" rotational viscometer with a CC25DIN/Ti coaxial cylinder geometry and thermostatic cell.

The quality of the spinning solution obtained is determined by the absence of impurities such as undissolved polymer particles and gels. These impurities thicken on the holes of the spinnerets, jeopardizing the quality of the fiber produced.

The method for determining the quality of the spinning solution is the filterability test.

The test consists in determining the clogging rate on a standard cloth (SEFAR-Nytal 5 µm) of the dope under examination.

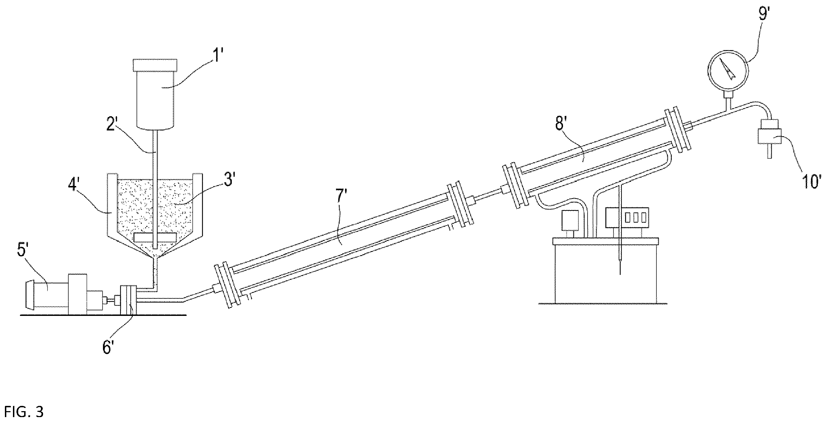

In practice, the filterability test is conducted in an apparatus comprising (see figure 3):
- a tank for the preparation of the slurry or storage of the dope (3') with a thermostatic jacket (4');
- gear metering pump (6');
- jacketed tube heat exchanger (7') fed with a glycol/water solution (length 1,400 mm, volume 90 ml)
- jacketed tube heat exchanger (8') fed with water at 50°C for the thermostat-regulation of the dope;
- pressure gauge (11');
- filter block (12') (SEFAR-Nytal 5 µm cloth).

Figure 3 also indicates with 1' the motor, with 2' the stirrer and with 5' the motor of the metering pump with a "stober"-type servo-reducer.

The spinning solution was fed to the tank 3' and then heated by means of a glycol and water mixture to 70°C through the exchanger 7' with a flow-rate of the pump of 27 cc/min (residence time 3.3 min). The dope was then cooled to 50°C by means of the exchanger connected to the thermostatic water bath 8'. The cooled dope was then passed through the filter block where the pressure was measured by means of the pressure gauge. The clogging rate of the filter was evaluated by the the increase in pressure as ΔP in ate/h.

In this example, the increase in ΔP in the control equipment was equal to 0.4 ate/h. This increase in pressure corresponds, in an industrial situation, to correct operating conditions of the line: this value in fact makes it possible to foresee a blockage of the system due to clogging of the filter press with 5 µm cloths, after 150 hours (6.25 days); a value of 150 hours is therefore a guarantee of continuity of the spinning, under excellent conditions.

The polymer solution in solvent thus obtained was fed to a spinning line for a carbon fiber precursor.

During the spinning process, the spinnerets, immersed in a coagulation bath composed of a mixture of water and DMSO, generated a perfectly round, compact and crack-free fiber. The fiber thus obtained was washed with deionized water to remove the residual solvent, stretched in various stages in boiling water for about 8 times its initial length; dried on hot rollers and collected in bobbins. The tows obtained are composed of fibers having a diameter of about 11 microns (equal to a titer of about 1 dtex), an average tenacity of 60 cN/Tex and an elongation of about 15%, measured on an Instron 5542 dynamometer with a 10N cell. according to the method ASTM D-3822, proving to be suitable for transformation into carbon fiber.

### Example 2

Dissolution of a medium-molecular-weight acrylic copolymer for textile use (MWn=40,000-55,000) composed of acrylonitrile and vinyl acetate (93/7 by weight with respect to the total weight of the polymer).

The polymer coming from the polymerization reactor in the form of slurry in water, after treatment in a stripping column for the removal of unreacted monomers, was washed and filtered on a rotary filter under vacuum, resulting in a cake consisting of polymer (51% in weight) and water (49% in weight).

100 kg of this cake were transferred to a stirred tank and 255 kg of pure dimethylacetamide, kept at a temperature of -10°C, were added. The resulting suspension was kept under stirring in the cooled tank at this temperature for only 5 minutes. The polymer suspension thus obtained was sent to a Fundabac candle filter which, after filtration, allowed a mass containing 42% by weight of water/solvent and 59% by weight of polymer to be obtained.

More specifically, the composition of the filtered mass was found to be equal to: 59% by weight of polymer, 34% by weight of DMAc and 7% by weight of water.

The polymer mass discharged from the filter was transferred to a stirred tank containing 118 kg of dimethylacetamide (DMAc) maintained at a temperature of 5°C and kept under stirring for 10' and then transferred through a gear pump to the transformation step into dope, analogously to what is described in Example 1.

The dope thus produced, with a content of solids at 25% and water at 2%, is characterized by a viscosity measured at 70°C of approximately 280 poises, approximately equal to 2% by weight and a solid content equal to 25% by weight.

The resulting spinning solution is free from impurities such as undissolved polymer particles and gels.

The method used for measuring the viscosity is the same as indicated in Example 1 and the method for determining the quality of the spinning solution is the filterability test, as in Example 1.

In this example, the increase in ΔP in the test effected on the equipment in figure 3 was 0.25 ate/h. This increase in pressure corresponds to the complete clogging of the filter press with 5 µm cloths every 272 hours, equal to 11.3 days, an acceptable value from the point of view of the production line.

The solution of polymer in solvent thus produced was fed to a spinning line for textile fiber; the spinnerets, immersed in a coagulation bath composed of a water/solvent mixture, generate crack-free fibers. The fibers were hot washed in deionized water, stretched about 5 times the initial length, dried on hot rollers and curled in a crimping machine. The fiber ribbons collected in tows (bundles of fibers) of about 110 g/m (Ktex) were subjected to steaming to obtain fibers with a denier of 3.3 dtex, a tenacity equal to about 28 cN/tex and an elongation equal to about 35%, measured on an Instron 5542 dynamometer with a 10N cell according to the method ASTM D-3822. A fiber with these characteristics proved to be suitable for transformation into manufactured articles through known textile cycles for synthetic fibers.

### Example 3

Dissolution of a high-molecular-weight acrylic copolymer (MWn = 75,000-100,000) consisting of acrylonitrile (98% by weight with respect to the total weight of the polymer) and itaconic acid (2% by weight with respect to the total weight of the polymer).

The polymer coming from the polymerization reactor in the form of slurry in water, after treatment in a stripping column for the removal of unreacted monomers, was washed and filtered on a rotary filter under vacuum, resulting in a cake consisting of polymer (55% by weight) and water (45% by weight).

200 kg of this cake were transferred to a stirred tank and 1,000 kg of a mixture consisting of DMSO (90% by weight) and water (10% by weight), kept at a temperature of 3°C, were added. The resulting suspension was kept under stirring at 5°C for 5 minutes and then fed to a centrifugal separator of the Kraus-Maffei type, discharging a mass containing 39% by weight of polymer and 61% by weight of the water/solvent mixture, whose proportions proved to be: 39% by weight of polymer, 50% by weight of solvent and 11% by weight of water.

The mass discharged from the centrifuge was in turn fed to a stirred tank, as described in Example 1, where 270 kg of DMSO were fed and 2.5 kg of an aqueous solution of ammonia at 25% by weight were added to obtain a slurry whose proportions were found to be: 20% by weight of polymer, 74.5% by weight of solvent and 5.5% by weight of water. The slurry was then transferred to a stirred tank.

The slurry, similarly to what is described in Example 1, was transformed into dope, by means of a volumetric pump, for feeding a wet acrylic spinning line for carbon fiber precursor.

The polymer solution was extruded by a spinneret in a coagulation bath composed of a water/DMSO solution, washed, stretched about 9 times the initial length in both hot water and steam and then collected on bobbins.

Continuous tows of 3,000 filaments were thus obtained, whose single filaments were round, void-free, glossy and transparent.

The fibers thus obtained proved to have a diameter of about 12 microns (equal to a titer of about 1.1-1.2 dtex), an average tenacity of 57 cN/Tex and an elongation equal to about 17%, measured on an Instron 5542 dynamometer with a 10N cell according to the method ASTM D-3822, proving to be suitable for transformation into carbon fiber.

## Claims

1. A process for the preparation of a homogeneous dispersion or slurry to be transformed into a homogeneous spinning solution for the production of acrylic fibers which comprises the following steps:
i) preparation of an aqueous suspension of acrylonitrile homopolymer or copolymer by the polymerization of monomers in aqueous suspension, removal of the unreacted monomers, filtration and washing of the aqueous suspension, obtaining a first filter cake comprising polymer and water in a ratio ranging from 40/60 to 60/40 by weight, preferably in a weight ratio equal to or greater than 1:1,
ii) dispersion of said first filter cake in a solvent/water mixture or in pure solvent in a weight ratio ranging from 2 to 10 times the weight of the cake, preferably at a temperature lower than or equal to 5°C and for a time ranging from 5 to 15 minutes, under stirring;
iii) separation of the solid/liquid phases of said polymer dispersion by filtration or centrifugation, obtaining a second cake comprising polymer and a solvent/water mixture, in a ratio ranging from 40/60 to 70/30 by weight;
iv) re-dispersion of the second cake obtained in step iii) in the same solvent or water/solvent mixture as step ii) in a weight ratio ranging from 2 to 10 times the weight of the polymer in the cake, at room temperature or at a temperature lower than room temperature for a time ranging from 5 to 20 minutes, obtaining a homogeneous dispersion or "slurry" wherein the solvent/polymer weight ratio ranges from 90/10 to 70/30.

2. The process according to claim 1, wherein the homogeneous dispersion or slurry obtained in step iv) is transformed into a homogeneous polymeric solution (dope) by means of heat exchangers downstream.

3. The process according to claim 1, wherein in steps ii) and iv), the solvent is selected from dimethylacetamide (DMAc), dimethylformamide (DMF) or dimethyl sulfoxide (DMSO).

4. The process according to one or more of the previous claims, wherein in step ii), the temperature is lower than 0°C.

5. The process according to one or more of the previous claims, wherein the quantity of water in the solvent/water mixture ranges from 0 to 20% by weight with respect to the total weight of the mixture.

6. The process according to one or more of the previous claims, wherein in step iv), the temperature is equal to 5°C.

7. The process according to claims 1 or 2, wherein the homogeneous spinnable polymeric solution has a polymer content ranging from 10 to 26% by weight with respect to the total weight of the spinning solution.

8. The process according to one or more of the previous claims, wherein in steps iii) and iv), water-soluble additives are added, preferably selected from ammonia, primary amines, secondary amines, quaternary ammonium salts, salts of metal ions capable of salifying the ionic end-groups of the polymer such as copper or silver, water-soluble polymers.

9. The process according to one or more of the previous claims, wherein the polymers are high-molecular-weight polymers, said high molecular weight ranging from 80,000 to 200,000 Da, or they are medium-molecular-weight polymers, said medium molecular weight ranging from 40,000 to 55,000 Da.

10. The process according to one or more of the previous claims, wherein the acrylonitrile copolymer is composed of acrylonitrile in a quantity ranging from 90 to 99% by weight with respect to the total weight of the copolymer and one or more co-monomers in a quantity ranging from 1 to 10% by weight with respect to the total weight of the copolymer.

11. The process according to claim 10, wherein the co-monomers are selected from neutral vinyl compounds such as methyl acrylate, methyl methacrylate, vinyl acetate, acrylamide; compounds containing one or more acid groups such as acrylic acid, itaconic acid, sulfonated styrenes.

## Patentansprüche

1. Verfahren zur Vorbereitung einer homogenen Dispersion oder Aufschlämmung, die in eine homogene Spinnlösung für die Herstellung von Acrylfasern verwandelt werden soll, das die folgenden Schritte umfasst:
i) Vorbereitung einer wässrigen Suspension von Acrylonitril-Homopolymer oder - Copolymer durch Polymerisation von Monomeren in wässriger Suspension, Entfernung der nicht umgesetzten Monomere, Filtration und Waschen der wässrigen Suspension, wobei ein erster Filterkuchen erhalten wird, der Polymer und Wasser in einem Gewichtsverhältnis von 40/60 bis 60/40, vorzugsweise in einem Gewichtsverhältnis gleich oder größer als 1:1 enthält,
ii) Dispersion des ersten Filterkuchens in einem Lösungsmittel-Wasser-Gemisch oder in einem reinen Lösungsmittel in einem Gewichtsverhältnis vom 2- bis zum 10-fachen des Kuchengewichtes, vorzugsweise bei einer Temperatur, die niedriger als 5°C oder gleich 5°C ist, und während einer Zeit von 5 bis 15 Minuten unter Rühren;
iii) Trennung der festen/flüssigen Phasen der Polymerdispersion durch Filtration oder Zentrifugation, wobei ein zweiter Kuchen erhalten wird, der das Polymer und ein Lösungsmittel/Wasser-Gemisch in einem Gewichtsverhältnis von 40/60 bis 70/30 enthält;
iv) Erneute Dispersion des in Schritt iii) erhaltenen zweiten Kuchens in demselben Lösungsmittel oder Wasser/Lösungsmittel-Gemisch wie in Schritt ii) in einem Gewichtsverhältnis vom 2- bis zum 10-fachen des Polymergewichtes in dem Kuchen, bei Raumtemperatur oder bei einer Temperatur, die niedriger als die Raumtemperatur ist, für eine Zeit von 5 bis 20 Minuten, wobei eine homogene Dispersion oder "Aufschlämmung" erhalten wird, wobei das Lösungsmittel/Polymer Gewichtsverhältnis von 90/10 bis 70/30 reicht.

2. Verfahren nach Anspruch 1, wobei die in Schritt iv) erhaltene homogene Dispersion oder Aufschlämmung mittels nachgeschalteter Wärmetauscher in eine homogene polymere Lösung (Dope) verwandelt wird.

3. Verfahren nach Anspruch 1, wobei in den Schritten ii) und iv) das Lösungsmittel aus Dimethylacetamid (DMAc), Dimethylformamid (DMF) oder Dimethylsulfoxid (DMSO) ausgewählt wird.

4. Verfahren nach einem oder mehreren der vorhergehenden Ansprüche, wobei in Schritt ii) die Temperatur niedriger als 0°C ist.

5. Verfahren nach einem oder mehreren der vorhergehenden Ansprüche, wobei die Menge an Wasser in der Lösungsmittel/Wasser-Mischung zwischen 0 und 20 Gew.-% bezogen auf das Gesamtgewicht der Mischung, liegt.

6. Verfahren nach einem oder mehreren der vorhergehenden Ansprüche, wobei in Schritt iv) die Temperatur gleich 5°C ist.

7. Verfahren nach Anspruch 1 oder 2, wobei die homogene spinnbare polymere Lösung einen Polymergehalt von 10 bis 26 Gew.-%, bezogen auf das Gesamtgewicht der Spinnlösung, aufweist.

8. Verfahren nach einem oder mehreren der vorhergehenden Ansprüche, wobei in den Schritten iii) und iv) wasserlösliche Additive zugesetzt werden, vorzugsweise ausgewählt aus Ammoniak, primären Aminen, sekundären Aminen, quaternären Ammoniumsalzen, Salzen von Metallionen, die in der Lage sind, die ionischen Endgruppen des Polymers in ein Salz zu verwandeln, wie Kupfer oder Silber, wasserlösliches Polymer.

9. Verfahren nach einem oder mehreren der vorhergehenden Ansprüche, wobei die Polymere Polymere mit hohem Molekulargewicht sind, wobei das hohe Molekulargewicht im Bereich von 80.000 bis 200.000 Da liegt, oder sie sind Polymere mit mittlerem Molekulargewicht, wobei das mittlere Molekulargewicht im Bereich von 40.000 bis 55.000 Da liegt.

10. Verfahren nach einem oder mehreren der vorhergehenden Ansprüche, wobei das Acrylonitril-Copolymer aus Acrylonitril in einer Menge von 90 bis 99 Gew.-%, bezogen auf das Gesamtgewicht des Copolymers, und einem oder mehreren Co-Monomeren in einer Menge von 1 bis 10 Gew.-%, bezogen auf das Gesamtgewicht des Copolymers, zusammengesetzt ist.

11. Verfahren nach Anspruch 10, wobei die Co-Monomere aus neutralen Vinylverbindungen wie Methylacrylat, Methylmethacrylat, Vinylacetat, Acrylamid; Verbindungen, die eine oder mehrere Säuregruppen enthalten, wie Acrylsäure, Itaconsäure, sulfonierte Styrole, ausgewählt sind.

## Revendications

1. Procédé de préparation d'une dispersion ou d'un coulis homogène à transformer en une solution de filage homogène pour la production de fibres acryliques, qui comprend les étapes suivantes :
i) la préparation d'une suspension aqueuse d'homopolymère ou de copolymère d'acrylonitrile par la polymérisation de monomères en suspension aqueuse, l'élimination des monomères n'ayant pas réagi, filtration et lavage de la suspension aqueuse, en obtenant un premier gâteau de filtration comprenant du polymère et de l'eau dans un rapport allant de 40/60 à 60/40 en poids, de préférence dans un rapport pondéral égal ou supérieur à 1 : 1,
ii) la dispersion dudit premier gâteau de filtration dans un mélange solvant/eau ou dans un solvant pur dans un rapport pondéral allant de 2 à 10 fois le poids du gâteau, de préférence à une température inférieure ou égale à 5 °C et pendant une durée allant de 5 à 15 minutes, sous agitation ;
iii) la séparation des phases solide/liquide de ladite dispersion de polymère par filtration ou centrifugation, en obtenant un second gâteau comprenant le polymère et un mélange solvant/eau, dans un rapport allant de 40/60 à 70/30 en poids ;
iv) la redispersion du second gâteau obtenu dans l'étape iii) dans le même solvant ou mélange eau/solvant que dans l'étape ii) dans un rapport pondéral allant de 2 à 10 fois le poids du polymère dans le gâteau, à température ambiante ou à une température inférieure à la température ambiante pendant une durée allant de 5 à 20 minutes, en obtenant une dispersion ou un « coulis » homogène dans lequel le rapport pondéral solvant/polymère va de 90/10 à 70/30.

2. Procédé selon la revendication 1, dans lequel la dispersion ou le coulis homogène obtenu à l'étape iv) est transformé en une solution polymère homogène (dope) au moyen d'échangeurs de chaleur en aval.

3. Procédé selon la revendication 1, dans lequel dans les étapes ii) et iv), le solvant est choisi parmi le diméthylacétamide (DMAc), le diméthylformamide (DMF) ou le diméthylsulfoxyde (DMSO).

4. Procédé selon une ou plusieurs des revendications précédentes, dans lequel dans l'étape ii), la température est inférieure à 0 °C.

5. Procédé selon une ou plusieurs des revendications précédentes, dans lequel la quantité d'eau dans le mélange solvant/eau va de 0 à 20 % en poids par rapport au poids total du mélange.

6. Procédé selon une ou plusieurs des revendications précédentes, dans lequel dans l'étape iv), la température est égale à 5 °C.

7. Procédé selon les revendications 1 ou 2, dans lequel la solution homogène de polymère filable présente une teneur en polymère allant de 10 à 26 % en poids par rapport au poids total de la solution de filage.

8. Procédé selon une ou plusieurs des revendications précédentes, dans lequel dans les étapes iii) et iv), des additifs hydrosolubles sont ajoutés, de préférence choisis parmi l'ammoniac, les amines primaires, les amines secondaires, les sels d'ammonium quaternaire, les sels d'ions métalliques capables de salifier les groupes terminaux ioniques du polymère tels que le cuivre ou l'argent, le polymère hydrosoluble.

9. Procédé selon une ou plusieurs des revendications précédentes, dans lequel les polymères sont des polymères de poids moléculaire élevé, ledit poids moléculaire élevé allant de 80 000 à 200 000 Da, ou sont des polymères de poids moléculaire moyen, ledit poids moléculaire moyen allant de 40 000 à 55 000 Da.

10. Procédé selon une ou plusieurs des revendications précédentes, dans lequel le copolymère d'acrylonitrile est composé d'acrylonitrile dans une quantité allant de 90 à 99 % en poids par rapport au poids total du copolymère et d'un ou plusieurs co-monomères en une quantité allant de 1 à 10 % en poids par rapport au poids total du copolymère.

11. Procédé selon la revendication 10, dans lequel les co-monomères sont choisis parmi les composés vinyliques neutres tels que l'acrylate de méthyle, le méthacrylate de méthyle, l'acétate de vinyle, l'acrylamide ; les composés contenant un ou plusieurs groupes acides tels que l'acide acrylique, l'acide itaconique, les styrènes sulfonés.
